# EUROPÄISCHE PATENTSCHRIFT

(11) **EP 3 814 087 B1**
(45) Veröffentlichungstag und Bekanntmachung des Hinweises auf die Patenterteilung: **09.02.2022**
(21) Anmeldenummer: 18796026.5
(22) Anmeldetag: 31.10.2018
(51) Int. Cl.: B29C 45/16, B29C 45/37, B29K 75/00

(54) **VERFAHREN ZUR HERSTELLUNG EINES VERBUNDTEILS**
METHOD FOR PRODUCING A COMPOSITE PART
PROCÉDÉ DE FABRICATION D'UNE PIÈCE COMPOSITE

(30) Priorität: 26.06.2018 DE 102018115291
(43) Veröffentlichungstag der Anmeldung: 05.05.2021
(73) Patentinhaber: KraussMaffei Technologies GmbH, 80997 München (DE)
(72) Erfinder: SCHMIDHUBER, Sebastian, 80805 München (DE); BEYL, Nicolas, 81679 München (DE)
(74) Vertreter: Krauss, Philipp
(86) Internationale Anmeldenummer: PCT/EP2018/079803
(87) Internationale Veröffentlichungsnummer: WO 2020/001799

(56) Entgegenhaltungen:
- EP-A1- 2 899 008
- WO-A1-2014/064155
- WO-A1-2014/064155
- JP-A- H0 952 262
- JP-A- H0 952 262
- JP-A- H08 309 789
- JP-A- H08 309 789
- JP-A- 2005 335 123
- JP-A- 2005 335 123
- JP-A- 2006 103 187
- US-A- 5 098 272
- US-A- 5 098 272
- US-A1- 2006 118 999
- US-A1- 2018 029 312
- US-A1- 2018 029 312

## Beschreibung

### Technisches Gebiet

Die vorliegende Erfindung betrifft ein Verfahren zur Herstellung eines Verbundteils.

### Hintergrund

Die Herstellung von Verbundteilen, bei denen ein thermoplastischer Grundträger mit einer Beschichtung versehen wird, ist im Stand der Technik bekannt. Als ein Beispiel der Herstellung von Verbundteilen ist die Veredelung von Oberflächen bekannt. Dabei besteht die Notwendigkeit, in einem ersten Teilschritt hergestellte oder separat zugeführte Substrate in einem zweiten Schritt mit einer höherwertigen Oberflächenbeschichtung zu versehen. Zur Oberflächenbeschichtung sind Mehrkomponentensysteme, beispielsweise duroplastische Lacke, bekannt, die aus mehreren flüssigen Komponenten bestehen. Diese flüssigen Komponenten müssen zur Bildung eines reaktiven Gemisches vermischt werden. Die Qualität der zu erzeugenden Oberfläche hängt unter anderem von der Qualität der Vermischung der flüssigen Komponenten ab. Für das Vermischen kommt häufig das sogenannte Hochdruck-Gegenstrom-Injektionsverfahren zum Einsatz, um hochreaktive flüssige Komponenten für kurze Aushärtezeiten einsetzen zu können. Auch aufgrund von relativ hohen auftretenden Werkzeuginnendrücken erfolgt vorzugsweise der Einsatz von Hochdrucktechnik.

Den Kern der sogenannten Hochdrucktechnik bildet eine besondere, teils kostenintensive und technisch teils anspruchsvolle Dosier- und Mischvorrichtung, auch als Dosiermaschine bekannt. Bei derartigen Dosiermaschinen kommt zur Vermischung der flüssigen Komponenten ein sogenannter Mischkopf zum Einsatz. Auf diese Weise ist die Verarbeitung schnell reagierender Rohstoff-Systeme möglich. Allerdings sind neben den hohen Kosten für diese Technik auch häufig prozesstechnische Nachteile miteinhergehend. Beispielsweise können sich stark ansteigende Werkzeug-Innendrücke negativ auf die Vermischung auswirken. Des Weiteren kann es zu Flitt, Kreuzkontamination der Rohstoffe, zu mechanischen Schwierigkeiten im Mischkopf in Folge von Abdichtungs- und Werkstoff-Kombinationsaufgaben und Problemen bei der Verschleißfestigkeit kommen. Im Wartungsfalle muss der Mischkopf ggf. vom Werkzeug abgebaut und zeit-/kostenintensiv repariert werden, was mit Stillstandszeiten einhergehen kann.

Die US 5 098 272 A beschreibt eine Vorrichtung zum Formen eines Metall-Elastomer-Verbundrades, bei der ein mittleres Formteil eine Metallradscheibe und eine Felgenbaugruppe enthält. Ein Basisformteil liegt im geschlossenen Zustand der Form an der Außenfläche des Metallrads an und weist eine Formhohlraumoberfläche auf, um eine dekorative Konfiguration für die Außenfläche des dekorativen Kunststoffkörpers des Verbundrads bereitzustellen. Eine Klemme liegt an der Innenseite des mittleren Formteils an, um das Mittelteil in abdichtenden Eingriff mit dem Basisformteil zu bringen. Die Formteile sind axial voneinander trennbar, um die Formvorrichtung zu öffnen und das mittlere Formteil von den Klemm- und Basisformteilen zu befreien.

Die US 2018 / 029 312 A1 offenbart ein Verfahren zur Herstellung von Kunststoffbauteilen, insbesondere von Verbundbauteilen, unter Verwendung von wenigstens zwei zu vermischenden Komponenten in einer Mischkammer und einer zwischen einer ersten und einer zweiten Hälfte eines Formwerkzeugs ausgebildeten Kavität, wobei die Kavität einen Formteilbereich und einen Angussbereich aufweist, wobei als Mischkammer der Angussbereich oder der Formteilbereich der Kavität verwendet wird

### Zusammenfassung der Erfindung

Es ist daher die Aufgabe der Erfindung, eine Lösung anzugeben, mit der die Herstellung von Verbundteilen kostengünstiger und effizienter verwirklicht werden kann.

Die Aufgabe wird mit einem Verfahren zur Herstellung eines Verbundteils gemäß Anspruch 1 gelöst.

Vorteilhafte Weiterbildungen sind Gegenstand der abhängigen Ansprüche.

Erfindungsgemäß wird ein besonders ausgebildetes Substrat zur Herstellung eines Verbundteils verwendet. Bei dem Herstellungsverfahren wird das Substrat in eine Kavität eines Beschichtungswerkzeugs eingebracht und mit einem Komponentensystem beschichtet. Das Substrat weist einen vom herzustellenden Verbundteil abzutrennenden integrierten Mischabschnitt zur substratnahen Vermischung des Komponentensystems auf.

Unter einem Substrat ist ein Bauteil, beispielsweise ein Trägerbauteil oder Grundträger, zu verstehen. Dieses Bauteil wird im Beschichtungswerkzeug mit dem Komponentensystem zumindest bereichsweise beschichtet. Die Beschichtung kann durch ein Überfluten des Substrats mit dem Komponentensystem erfolgen. Das Substrat kann zumindest teilweise im fertigen Verbundteil verbleiben. Ein solches Substrat kann beispielsweise ein flächiges Bauteil sein. Das Komponentensystem kann ein Mehrkomponentensystem sein, beispielsweise ein Lack oder ein Duroplast-Material, z. B. ein PUR- oder PUA-Material. Statt einem Mehrkomponentensystem können aber auch einkomponentige Beschichtungssysteme zum Einsatz kommen.

Der Mischabschnitt des Substrats kann so ausgebildet sein, dass beim Durchströmen oder Überströmen des Mischabschnitts eine gezielte Umlenkung/Umwälzung des Komponentensystems mit der Wirkung einer Vermischung oder Nachvermischung erfolgt. Der Mischabschnitt dient somit als eine Vorrichtung zum Mischen des Komponentensystems, in der allein die Strömungsbewegung die Vermischung bewirkt. Der Mischabschnitt ist demnach so ausgebildet, dass er eine Strömung des zugeführten Komponentensystems in Substratnähe gezielt beeinflussen kann. Im Kontext der Erfindung ist unter einer substratnahen Vermischung eine Vermischung oder Nachvermischung am Substrat bzw. in unmittelbarer Substratnähe zu verstehen. Das bedeutet, eine Vermischung erfolgt immer aufgrund der Beschaffenheit des Substrats und unabhängig davon, auf welche Weise das Komponentensystem zugeführt wird. Die Zuführung kann beispielsweise mit einem Misch- oder Dosierkopf erfolgen.

Der Mischabschnitt ist ein integraler Abschnitt des Substrats. Durch die Integration des Mischabschnitts in das Substrat ist es gegebenenfalls auch möglich, von der vorstehend beschriebenen komplexen Hochdruck-Technologie auf die einfachere sogenannte Misch- und Dosier-Technologie (z.B. niedrigeres Druckniveau) zu wechseln, wodurch eine beträchtliche Kostenreduzierung möglich wird. Des Weiteren wird durch Integration des Mischabschnitts in das Substrat der Mischabschnitt bei einer später erfolgenden Entformung des Bauteils aus dem Beschichtungswerkzeug mit entformt und kann so im Wege einer Nachbearbeitung des Bauteils, beispielsweise durch Besäumen, Fräsen oder Stanzen, von dem fertigen Bauteil abgetrennt werden. Da der Mischabschnitt nicht im Beschichtungswerkzeug verbleibt, muss dieser nicht gereinigt werden, wodurch eine Reinigung des vermischenden Bauteils entfällt. Außerdem können im Mischabschnitt ggf. aus dem vorhergehenden Zyklus verbliebene Materialpartikel dann im Folgezyklus keine Fehlstellen mehr hervorrufen. Die Integration des Mischabschnitts in das Substrat hat ferner den Vorteil, dass ein manuelles oder nur kostspielig zu automatisierendes Einlegen des Mischabschnitts in das Beschichtungswerkzeug entfällt.

Das Substrat weist einen im herzustellenden Verbundteil verbleibenden Formteilabschnitt auf, der in einem Formteilbereich der Kavität des Beschichtungswerkzeugs anordenbar ist. Der Mischabschnitt ist zur Abtrennung vom herzustellenden Verbundteil und zur Anordnung in einem Mischbereich der Kavität ausgebildet. Das Substrat kann demnach zwei Abschnitte aufweisen, von denen der eine, das heißt der Formteilabschnitt, im fertigen Bauteil beziehungsweise Verbundteil verbleibt und der andere Abschnitt, das heißt der Mischabschnitt, vom herzustellenden Verbundteil später abgetrennt wird.

Der Mischabschnitt ist dabei so ausgebildet, dass dieser dann, wenn das Substrat in der Kavität des Formwerkzeugs platziert ist, eine Strömung des Komponentensystems zum Formteilabschnitt derart beeinflusst, dass dieses vermischt wird. Vorzugsweise ist der Mischabschnitt in einem Randbereich des Substrats, insbesondere an einem Randbereich des Formteilabschnitts vorgesehen.

Der Mischabschnitt kann einen Basisabschnitt aufweisen. Insbesondere kann der Basisabschnitt plattenartig ausgebildet sein. Der Formteilabschnitt des Substrats kann ebenfalls plattenartig ausgebildet sein und sich unmittelbar an den Basisabschnitt anschließen. Der Formteilabschnitt kann eine Verlängerung des Basisabschnitts sein, d.h. ohne speziellem oder merklichem Übergang mit dem Formteilabschnitt verbunden sein. Insbesondere kann der Formteilabschnitt mit einem Rand des Basisabschnitts verbunden sein bzw. sich von diesem weg erstrecken. Der Formteilabschnitt kann beispielsweise ein flächiges Element mit im Wesentlichen konstanter Wandstärke sein.

Vorzugsweise weist der Mischabschnitt mehrere strömungsbeeinflussende und die (Nach-)Vermischungswirkung einstellende Elemente auf. Strömungsbeeinflussende Elemente können beispielsweise Vorsprünge und/oder Vertiefungen in beziehungsweise an dem Substrat, genauer gesagt an dem Mischabschnitt des Substrats sein. Die strömungsbeeinflussenden Elemente können beispielsweise geformte Vorsprünge sein. Die strömungsbeeinflussenden Elemente sind vorzugsweise so ausgebildet, dass sie die Strömung eines an dem Substrat entlangströmenden Materials beeinflussen. Dementsprechend sind die strömungsbeeinflussenden Elemente so ausgebildet, dass sich diese von einer Fläche des Substrats, welche eine Strömungsrichtung vorgibt, weg erstrecken. Diese Fläche ist vorzugsweise die zu beschichtende Fläche des Substrats. Die strömungsbeeinflussenden Elemente können sich beispielsweise im Wesentlichen auch senkrecht bzw. rechtwinklig zu der die Strömungsrichtung vorgebenden Fläche des Substrats erstrecken. Im Mischabschnitt kann die die Strömungsrichtung vorgebende Fläche eine Oberfläche des wie vorstehend beschriebenen plattenartigen Basisabschnitts sein. Die strömungsbeeinflussenden Elemente erstrecken sich dann von dieser Oberfläche weg, sodass ein an der Oberfläche entlangströmendes Material auf die strömungsbeeinflussenden Elemente trifft und zwischen diesen hindurchströmen muss. Wie bereits vorstehend erwähnt kann der Basisabschnitt plattenartig ausgebildet sein. Die strömungsbeeinflussenden Elemente können sich von diesem plattenartigen Abschnitt beispielsweise im Wesentlichen senkrecht weg erstrecken.

Gemäß einer bevorzugten Ausführungsform weist das Substrat ferner einen Auslaufbereich zur Beruhigung des Komponentensystems zur laminaren Strömung auf. Der Auslaufbereich kann in Strömungsrichtung nachfolgend dem Mischabschnitt angeordnet sein.

Der Formteilabschnitt kann zum Tragen eines zu beschichtenden Halbzeugs eingerichtet sein. Insbesondere kann der Formteilabschnitt eine Fläche aufweisen, auf welcher ein zu beschichtendes Halbzeug befestigt bzw. getragen werden kann. Bei der Beschichtung des Substrats wird dann das Komponentensystem auf das zu beschichtende Halbzeug aufgebracht, wodurch das Halbzeug fest mit dem Substrat verbunden wird. Vorzugsweise ist das zu beschichtende Halbzeug ein thermoplastischer Grundträger, ein Furnier, beispielsweise ein Echtholzfurnier, ein faserverstärktes Halbzeug oder ein textiles Halbzeug. Auch ist es möglich, Kombinationen aus unterschiedlichen Halbzeugen als zu beschichtendes Halbzeug vorzusehen.

Das Substrat kann für eine direkte Beschichtung ausgebildet sein, also ohne einem darauf befindlichen zusätzlichen Halbzeug bereitgestellt werden. Zur Verbesserung der Hafteigenschaften des Substrats kann die zu beschichtende Fläche des Substrats aktiviert sein, beispielsweise durch Beflammen oder durch eine Plasmabehandlung. Auf diese Weise kann die Haftung zwischen dem Substratwerkstoff und der aufzubringenden Beschichtung bzw. dem Komponentensystem verbessert werden.

Das Substrat kann durch Spritzgießen eines thermoplastischen Materials hergestellt sein.

Ferner ist ein Werkzeug zur Herstellung eines Verbundteils unter Verwendung eines wie vorstehend beschriebenen Substrats geschaffen. Wie bereits vorstehend erwähnt, weist das Substrat einen im herzustellenden Verbundteil verbleibenden Formteilabschnitt und einen vom herzustellenden Verbundteil abzutrennenden Mischabschnitt auf. Das Werkzeug weist ein Beschichtungswerkzeug mit zwei Formhälften zur Bildung einer Kavität auf. Die Kavität hat einen Formteilbereich und einen Mischbereich. Des Weiteren weist das Beschichtungswerkzeug ein Angusssystem zum Zuführen des Komponentensystems zu der Kavität auf.

Der Formteilbereich des Beschichtungswerkzeugs ist zur Aufnahme des Formteilabschnitts des Substrats ausgebildet. Der Mischbereich des Beschichtungswerkzeugs ist zur Aufnahme des Mischabschnitts des Substrats ausgebildet. Der Mischbereich kann gegenüber dem Formteilbereich deutlich kleiner ausgebildet sein. Das Angusssystem ist über den Mischbereich mit dem Formteilbereich verbunden. Das Angusssystem kann einen Fließkanal für das Komponentensystem aufweisen und mündet in den Mischbereich. Dementsprechend strömt ein über das Angusssystem zugeführtes Komponentensystem zunächst durch den Mischbereich und anschließend durch den Formteilbereich der Kavität. Bei eingelegtem Substrat wird dieses demnach zunächst im Bereich des Mischabschnitts überströmt bevor das Material den Formteilabschnitt erreicht, sodass im Bereich des Formteilabschnitts bzw. im Formteilbereich ein ausreichend homogen vermischtes Komponentensystem vorliegt.

Das Werkzeug kann ferner ein Formwerkzeug zur Herstellung des Substrats aufweisen. Das Formwerkzeug kann zwei Formhälften zur Bildung einer Kavität aufweisen, die einen Formteilbereich und einen Mischbereich aufweist. Der Mischbereich der Kavität ist zur Ausbildung des Mischabschnitts an dem Substrat eingerichtet. Die Kavität des Formwerkzeugs ist gegenüber der Kavität des Beschichtungswerkzeugs kleiner ausgebildet.

Das Werkzeug kann dazu eingerichtet sein, das Substrat durch Umlegen der Kavität von dem Formwerkzeug in das Beschichtungswerkzeug zu überführen. Ein Umlegen der Werkzeugkavität kann beispielsweise mittels Drehtisch, Wendeplatte oder Schiebetisch verwirklicht sein. Die Verwendung derartiger Technologien hat den Vorteil, dass die Herstellung eines Substrats zeitsynchron mit einer weiteren Bearbeitung des Substrats erfolgen kann. Genauer gesagt kann beispielsweise im Formwerkzeug das Substrat durch einen Spritzgießprozess hergestellt werden während gleichzeitig ein im vorherigen Zyklus hergestelltes Substrat in der Kavität des Beschichtungswerkzeugs mit einer Oberflächenbeschichtung versehen wird. Ferner ist eine Maschine zur Herstellung einer Verbundteils mit einer Schließeinheit, einer optionalen Einspritzeinheit, einer Zuführvorrichtung zum Zuführen von flüssigen Komponenten eines Komponentensystems und mit einem in der Schließeinheit aufgenommenen Werkzeug der vorstehend beschriebenen Art geschaffen.

Erfindungsgemäß ist ein Verfahren zur Herstellung eines Verbundteils geschaffen. Das Verfahren umfasst die Schritte Platzieren eines wie vorstehend beschriebenen Substrats in einer Kavität eines Beschichtungswerkzeugs und Beschichten des Substrats durch Fluten der Kavität mit einem Komponentensystem. Dabei erfolgt eine substratnahe Vermischung des Komponentensystems aufgrund der Beschaffenheit bzw. der Form des Substrats. Das Komponentensystem wird beim Durch- oder Überströmen des Mischabschnitts in der Kavität des Beschichtungswerkzeugs vermischt.

Das erfindungsgemäße Verfahren weist dabei den Schritt Bereitstellen eines wie vorstehend beschriebenen Substrats auf, wobei das Substrat einen im herzustellenden Verbundteil verbleibenden Formteilabschnitt und den Mischabschnitt aufweisen kann, der vorzugsweise vom herzustellenden Verbundteil abgetrennt wird. Beim vorstehend beschriebenen Beschichtungsschritt strömt das Komponentensystem durch den Mischabschnitt des Substrats, wodurch dieses vermischt wird, bevor es den Formteilabschnitt erreicht.

Unter einem Strömen durch den Mischabschnitt ist ein derartiges Strömen eines flüssigen Materials zu verstehen, bei dem das Material zumindest zwischen zwei Abschnitten des Mischabschnitts, beispielsweise den vorstehend erwähnten strömungsbeeinflussenden Elementen oder Abschnitten hindurchströmt.

Gemäß einer bevorzugten Ausführungsform umfasst der Schritt des Bereitstellens des Substrats ein Herstellen des Substrats durch Spritzgießen, insbesondere durch Spritzgießen eines thermoplastischen Materials.

Das Beschichten des Substrats kann zeitgleich mit dem Herstellen eines weiteren Substrats erfolgen.

Gemäß einer bevorzugten Ausführungsform weist das Verfahren ferner den Schritt Entformen des beschichteten Substrats aus dem Formwerkzeug und Abtrennen des Mischabschnitts von dem Verbundteil auf.

Gemäß einer bevorzugten Ausführungsform wird bei dem Beschichtungsschritt des Verfahrens das Komponentensystem in Form von wenigstens zwei flüssigen Komponenten zugeführt, die im Wesentlichen unvermischt sind. Eine Vermischung des Komponentensystems erfolgt dabei im Wesentlichen in der Kavität des Beschichtungswerkzeugs. Alternativ kann das Komponentensystem beziehungsweise können dessen flüssige Komponenten vorgemischt zugeführt werden, sodass im Mischbereich der Kavität eine Nachvermischung des Komponentensystems erfolgt.

### Kurzbeschreibung der Zeichnungen

Fig. 1 zeigt eine Querschnittsansicht eines Substrats, wie es bei dem erfindungsgemäßen Verfahren verwendet wird.
Die Figuren 2 bis 4 zeigen ein Werkzeug zur Herstellung eines Verbundteils unter Verwendung des in Fig. 1 gezeigten Substrats in unterschiedlichen Betriebszuständen.
Fig. 5 zeigt eine vergrößerte Darstellung eines Mischabschnitts des in Fig. 1 gezeigten Substrats.
Fig. 6 zeigt das in Fig. 1 gezeigte Substrat in beschichtetem Zustand.
Fig. 7 zeigt ein fertiges Verbundteil.

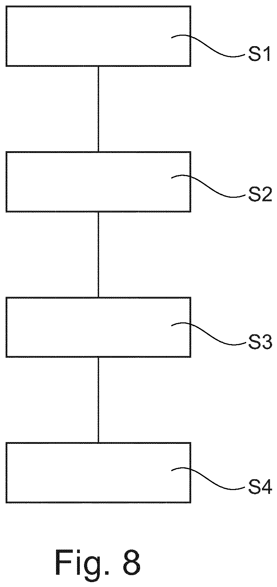

Fig. 8 zeigt Verfahrensschritte des erfindungsgemäßen Verfahrens zur Herstellung eines Verbundteils.

### Detaillierte Beschreibung eines Ausführungsbeispiels

Nachfolgend wird eine Ausführungsform der Erfindung unter Bezugnahme auf die Figuren beschrieben. Gleiche Bezugszeichnen in den Figuren kennzeichnen gleiche oder ähnliche Elemente.

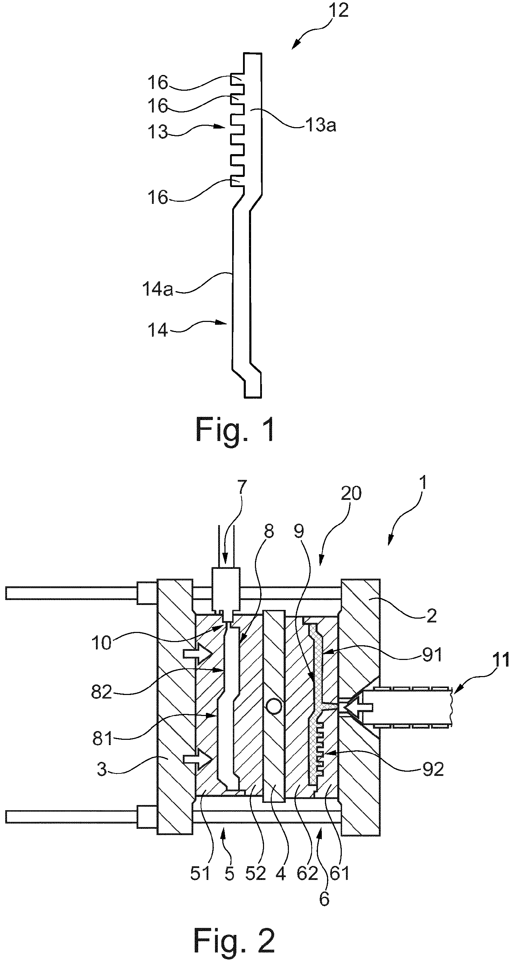

Fig. 1 zeigt eine Seitenansicht eines Substrats 12 gemäß einer Ausführungsform der vorliegenden Erfindung. Genauer gesagt zeigt Fig. 1 eine Schnittansicht.

Das Substrat 12 weist einen Formteilabschnitt 14 und einen Mischabschnitt 13 auf. Obwohl dies in Fig. 1 nicht dargestellt ist, ist das Substrat 12 ein flächiges Bauteil, bei welchem sich sowohl der Formteilabschnitt 14 als auch der Mischabschnitt 13 senkrecht zur Zeichnungsebene erstrecken. Das Substrat kann aber auch ein konturiertes bis dreidimensionales Bauteil sein. Der Mischabschnitt 13 weist in der Ausführungsform eine geringere Breite als der Formteilabschnitt 14 auf, kann jedoch auch dieselbe Breite oder eine größere Breite als der Formabschnitt 14 aufweisen. Wie dies in Fig. 1 angedeutet ist, weist der Formteilabschnitt 14 eine Fläche 14a auf, die im Zuge der Verarbeitung des Substrats 12 mit einer Schicht aus einem Komponentensystem versehen werden soll. Um eine Haftung zwischen dem duroplastischen Material und dem Substrat 12 im Bereich des Formteilabschnitts 14 sicherzustellen, kann die Fläche 14a vorab einer entsprechenden Oberflächenbehandlung unterzogen werden.

Der Mischabschnitt 13 des Substrats 12 weist strömungsbeeinflussende Elemente 16 auf. In Fig. 1 sind sechs dieser strömungsbeeinflussenden Elemente 16 sichtbar. Die strömungsbeeinflussenden Elemente 16 sind bei der gezeigten Ausführungsform beispielhaft als zylindrische Vorsprünge ausgebildet, die allesamt die gleiche Höhe aufweisen. Die strömungsbeeinflussenden Elemente 16 erstrecken sich im Wesentlichen senkrecht zu einer Haupterstreckungsrichtung des Substrats 12, insbesondere rechtwinkelig zu einem plattenartigen Basisabschnitt 13a. Die Haupterstreckungsrichtung kann nach entsprechender Auslegung beispielsweise der Längsrichtung des Substrats entsprechen.

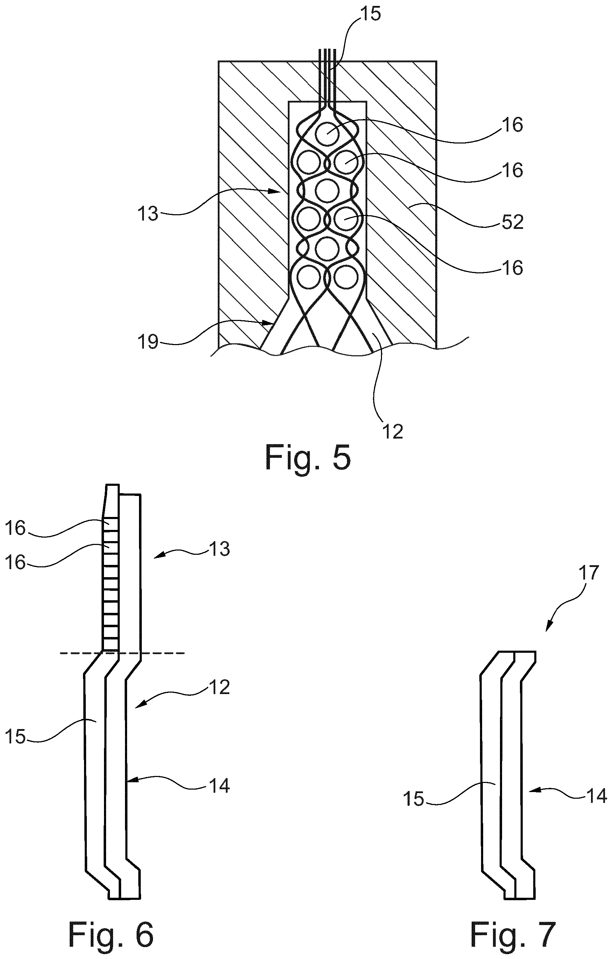

Die Ausgestaltung der strömungsbeeinflussenden Elemente 16 ist auch aus Fig. 5 ersichtlich, welche eine Vorderansicht des Mischabschnitts 13 des Substrats 12 zeigt, also eine Ansicht von links auf das in Fig. 1 gezeigte Substrat 12. Allerdings ist das Substrat 12 in Fig. 5 in ein Beschichtungswerkzeug 5 eingelegt, welches später noch detaillierter beschrieben wird. Wie es in Fig. 5 bereits angedeutet ist, dienen die strömungsbeeinflussenden Elemente 16 zur Vermischung eines Komponentensystems 15. Der Mischabschnitt 13 wirkt dabei als ein Statikmischer zum Vermischen von flüssigen Komponenten des Komponentensystems 15.

Zur Beschichtung des Substrats 12 kann eine Maschine 1 verwendet werden, wie sie in den Figuren 2 bis 4 dargestellt ist. Die Maschine 1 weist eine Schließeinheit 20, eine Einspritzeinheit 11, eine Zuführvorrichtung 7 zum Zuführen des Komponentensystems 15 und ein in der Schließeinheit aufgenommenes Werkzeug auf. Bei der gezeigten Ausführungsform weist das Werkzeug ein Beschichtungswerkzeug 5 und ein Formwerkzeug 6 zur Herstellung des Substrats auf. Die Maschine 1 ist demnach zur Herstellung des Substrats 12 ausgebildet.

Das Beschichtungswerkzeug 5 weist zwei Formhälften 51,52 zur Bildung einer Kavität 8 auf. Die Kavität 8 weist einen Formteilbereich 81 und einen Mischbereich 82 auf. Eine erste Formhälfte 51 des Beschichtungswerkzeugs 5 ist an einer beweglichen Aufspannplatte 3 der Schließeinheit 20 befestigt. Eine zweite Formhälfte 52 des Beschichtungswerkzeugs 5 ist auf einer Seite einer Wendeplatte 4 der Schließeinheit 20 befestigt.

Das Formwerkzeug 6 weist zwei Formhälften 61, 62 zur Bildung einer Kavität 9 auf. Die Kavität 9 weist einen Formteilbereich 91 und einen Mischbereich 92 auf. Der Mischbereich 92 dient der Ausbildung des Mischabschnitts 13 des Substrats 12. Eine erste Formhälfte 61 des Formwerkzeugs 6 ist an einer festen Aufspannplatte 2 der Schließeinheit 20 befestigt. Eine zweite Formhälfte 62 des Formwerkzeugs 6 ist auf der gegenüberliegenden Seite der Wendeplatte 4 befestigt.

Das Beschichtungswerkzeug 5 weist ferner ein Angusssystem 10 zum Zuführen eines Komponentensystems 15 zu der Kavität 8 auf. Wie es in Fig. 2 gezeigt ist, besteht das Angusssystem 10 im Wesentlichen aus einem Kanal beziehungsweise Fließkanal, über welchen das Komponentensystem 15 von einer Zuführvorrichtung 7 in die Kavität 8 zugeführt werden kann. Bei der gezeigten Ausführungsform ist der Kanal beziehungsweise das Angusssystem 10 an der Oberseite des Beschichtungswerkzeugs 5 vorgesehen. Die Zuführvorrichtung 7 ist mit dem Angusssystem 10 fluidverbindbar und das Angusssystem 10 mündet über einen nicht dargestellten Anschnitt in die Kavität 8.

Die Kavität 8 ist gegenüber der Kavität 9 vergrößert ausgebildet. Die Kavität 8 besteht aus einem Mischbereich 82 und einem Formteilbereich 81. Der Mischbereich 82 ist zur Aufnahme des Mischabschnitts 13 des Substrats 12 ausgebildet. Fig. 5 zeigt eine vergrößerte Ansicht des Mischabschnitts 13, welcher in die Formhälfte 52 des Beschichtungswerkzeugs 5 eingelegt ist.

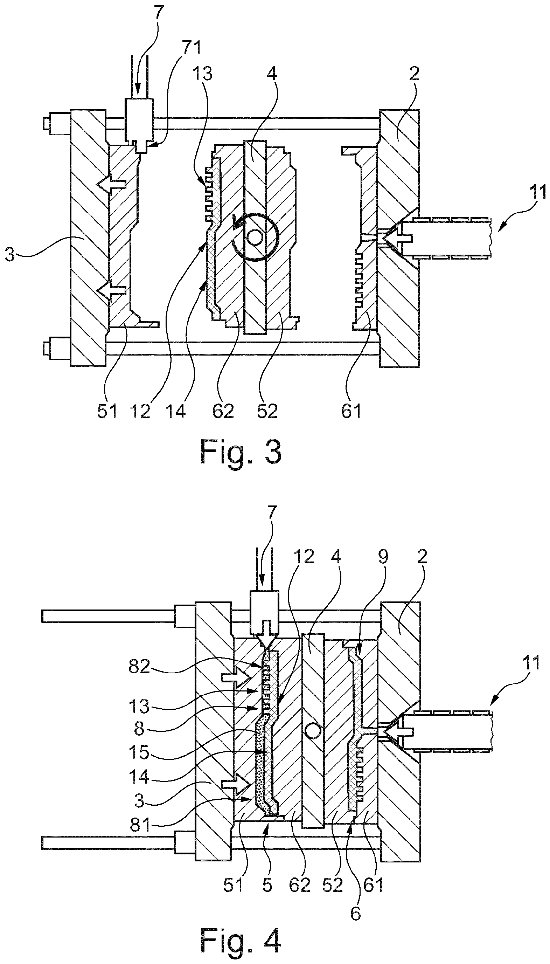

Die Kavität 8 weist ferner einen Formteilbereich 81 auf, der dazu eingerichtet ist, den Formteilabschnitt 14 des Substrats 12 aufzunehmen. Wie es aus Fig. 4 ersichtlich ist, ist die Kavität 8 so ausgebildet, dass ein eingeleitetes Komponentensystem 15 zunächst durch den Mischbereich 82 der Kavität 8 strömen muss, um in den Formteilbereich 81 der Kavität 8 zu gelangen. Da der vorstehend beschriebene Mischabschnitt 13 in dem Mischbereich 82 der Kavität 8 angeordnet ist, strömt das Komponentensystem 15 zwischen den strömungsbeeinflussenden Elementen 16 hindurch, wie es in Fig. 5 angedeutet ist. Auf diese Weise wird das Komponentensystem 15 vermischt. Das Komponentensystem 15 kann in Form von im Wesentlichen unvermischten flüssigen Komponenten zugeführt werden. Ist dies der Fall, werden die flüssigen Komponenten des Komponentensystems 15 nur durch den Mischabschnitt 13 vermischt. Das so entstandene Gemisch gelangt dann in den Formteilbereich 81, in welchem sich der Formteilabschnitt 14 des Substrats 12 befindet. Die Fläche 14a des Formteilabschnitts 14 wird auf diese Weise mit dem gemischten Komponentensystem 15 überflutet. Nach einer entsprechenden Aushärtung des Komponentensystems 15 auf dem Substrat 12 kann das so entstandene Verbundteil aus dem Beschichtungswerkzeug 5 entformt werden.

Die Herstellung eines Verbundbauteils 17 wird nachfolgend unter Bezugnahme auf die Figuren 2 bis 7 detaillierter beschrieben.

Fig. 2 zeigt einen Betriebszustand der Maschine 1 zur Ausführung des erfindungsgemäßen Verfahrens. Genauer gesagt ist ein Zustand nach einem ersten Schuss dargestellt. Während des ersten Schusses ist die Kavität 9 des Formwerkzeugs 6, also des Spritzgießwerkzeugs, mittels der Einspritzeinheit 11 in bekannter Art und Weise mit einer spritzgießfähigen Kunststoffmasse gefüllt worden. Auf diese Weise wurde das Substrat 12 in Form eines Spritzgussrohlings gebildet. In der Kavität 8 des Beschichtungswerkzeugs 5 erfolgte keine Aktion, weshalb diese im gezeigten Betriebszustand leer ist.

Nach dem ersten Schuss, also nach der Herstellung des Substrats 12, werden das Beschichtungswerkzeug 5 und das Formwerkzeug 6 geöffnet. Dabei verbleibt das Substrat 12 an der Formwerkzeughälfte 62, welche der Wendeplatte 4 zugeordnet ist. Die Wendeplatte 4 wird dann um 180° gedreht, sodass die Formwerkzeughälfte 62, welche das Substrat 12 trägt, der Formwerkzeughälfte 51 gegenüberliegend angeordnet ist. Zusammen mit der Formwerkzeughälfte 62 wird auch die auf der gegenüberliegenden Seite der Wendeplatte 4 vorgesehene Formwerkzeughälfte 52 bewegt. Auf diese Weise wird die Formwerkzeughälfte 52 der Formwerkzeughälfte 61 gegenüberliegend angeordnet. Die Formwerkzeughälften 52 und 61 bilden nun das Formwerkzeug 6 und die Formwerkzeughälften 51 und 62 bilden das Beschichtungswerkzeug 5. Dieser Betriebszustand ist in Fig .3 gezeigt. Alternativ kann statt einem System mit einer Wendeplatte beispielsweise auch ein System mit einem Schiebetisch zum Einsatz kommen, um die Formwerkzeughälften umzulegen.

Das Formwerkzeug 6 weist nun wiederum eine Kavität 9 zum Spritzgießen eines weiteren Spritzgussrohlings bzw. Substrats 12a auf. Das vorher bzw. mit dem vorangegangenen Schuss hergestellte Substrat 12 befindet sich in der Kavität 8 des Beschichtungswerkzeugs 5. Mit dieser Positionierung der Formwerkzeughälften werden das Beschichtungswerkzeug 5 und das Formwerkzeug 6 geschlossen. Nach dem Schließvorgang werden simultan das weitere Substrat 12a im Formwerkzeug 6 gespritzt und das vorher hergestellte Substrat 12 im Beschichtungswerkzeug 5 mit dem Komponentensystem 15 versehen, welches beispielsweise eine Lackbeschichtung oder eine Duroplast-Beschichtung ist, z. B. eine PUR- oder PUA-Beschichtung. Dieser Betriebszustand ist in Fig. 4 gezeigt.

Das Substrat 12 ist so in der Kavität 8 angeordnet, dass der Mischabschnitt 13 im Mischbereich 82 der Kavität 8 angeordnet ist und der Formteilabschnitt 14 im Formteilbereich 81 der Kavität 8 angeordnet ist. In der gezeigten Ausführungsform ist der Mischabschnitt 13 bzw. sind die darin vorgesehenen strömungsbeeinflussenden Elemente so eingerichtet, dass diese im Wesentlichen bis zu einer Innenwand des Beschichtungswerkzeugs 5 ragen, sodass ein Durchströmen des Mischbereichs 82 der Kavität 8 nur möglich ist, wenn das Komponentensystem 15 zwischen den strömungsbeeinflussenden Elementen 16 hindurchströmt.

Wie bereits vorstehend dargelegt weist das Beschichtungswerkzeug 5 das Angusssystem 10 auf, durch welches der Kavität 8, genauer gesagt dem Mischbereich 82, das Komponentensystem 15 bzw. dessen flüssige Komponenten zugeführt werden. Das über das Angusssystem 10 eingeleitete Komponentensystem 15 strömt somit über den Mischbereich 82 der Kavität 8 zu dem Formteilbereich 81 der Kavität 8. Dabei strömt das Komponentensystem 15 bzw. strömen dessen flüssige Komponenten durch den Mischabschnitt 13 des Substrats 12, genauer gesagt zwischen den strömungsbeeinflussenden Elementen 16 hindurch, wodurch das Komponentensystem 15 bzw. dessen flüssige Komponenten vermischt werden.

Der Mischabschnitt 13 wirkt in der Kavität 8 wie ein Statikmischer bzw. eine statische Mischvorrichtung. Im Strömungsverlauf durch den Mischbereich 82 wird der über das Angusssystem 10 eingeleitete Materialstrom bzw. das eingeleitete Komponentensystem 15 in mehrere Teilströme unterteilt und am Ende des Mischbereichs wieder zu einem Strom zusammengeführt. Das vermischte Komponentensystem 15 strömt dann in den Formteilbereich 81 der Kavität 8, in welchem sich der Formteilabschnitt 14 des Substrats 12 befindet. Die dem Innenraum der Kavität 8 zugewandte Fläche 14a des Substrats 12 wird auf diese Weise mit dem vermischten Komponentensystem 15 überströmt. Nach erfolgter vollständiger Flutung der Kavität 8 mit dem Komponentensystem 15 erfolgt eine zumindest teilweise Aushärtung des Komponentensystems 15. Der Beschichtungsvorgang ist damit abgeschlossen.

Nach dem Spritzgießen des weiteren Substrats 12a in der Kavität 9 und der erfolgten Beschichtung des Substrats 12 in der Kavität 8 werden das Beschichtungswerkzeug 5 und das Formwerkzeug 6 geöffnet. Das mit dem Komponentensystem 15 beschichtete Substrat 12 wird aus dem Beschichtungswerkzeug entformt. Das so entstandene Zwischenprodukt ist in Fig. 6 gezeigt. Das in der Kavität 9 hergestellte Substrat 12a wird anschließend in einem weiteren Zyklusschritt in der Kavität 8 in der vorstehend beschriebenen Art mit einer Beschichtung versehen.

Das in Fig. 6 gezeigte Zwischenprodukt besteht aus dem Substrat 12 sowie einer Schicht des ausgehärteten Komponentensystems 15. In einem Nachbearbeitungsschritt wird der Mischabschnitt 13 des Substrats samt darauf befindlichem Komponentensystem 15 von dem Formteilabschnitt 14 samt dem darauf befindlichen Komponentensystem 15 abgetrennt, wie es in Fig. 6 durch eine gestrichelte Linie dargestellt ist. Auf diese Weise wird das gewünschte Verbundteil 17 erhalten, wie es in Fig. 7 dargestellt ist.

Das Substrat 12 kann ein Spritzgussrohling sein, wie er vorstehend beschrieben wurde. Eine Abwandlung der vorstehend beschriebenen Maschine 1 kann ausschließlich ein Beschichtungswerkzeug und damit kein Formwerkzeug zur Herstellung des Substrats aufweisen. Das Substrat kann mit einer separaten Maschine und an einem anderen Ort hergestellt werden. In die Maschine gemäß der Abwandlung kann das Substrat dann in das Beschichtungswerkzeug automatisiert eingelegt werden, beispielsweise mit Hilfe eines Greifers oder eines Roboterarms. Das Komponentensystem kann ein mehrkomponentiges vernetzendes Beschichtungssystem sein, z. B. ein Lacksystem oder eine Duroplast-Beschichtung. Duroplast-Materialien können beispielsweise PUR- oder PUA-Materialien sein.

### Bezugszeichenliste

- 1: Maschine
- 5: Beschichtungswerkzeug
- 6: Formwerkzeug
- 7: Zuführvorrichtung
- 8: Kavität
- 10: Angusssystem
- 11: Einspritzeinheit
- 12: Substrat
- 13: Mischabschnitt
- 13a: Basisabschnitt
- 14: Formteilabschnitt
- 15: duroplastisches Material
- 16: strömungsbeeinflussende Elemente
- 17: Verbundteil
- 19: Auslaufbereich
- 20: Schließeinheit
- 51,52: Formhälften
- 61,62: Formhälften
- 81: Formteilbereich
- 82: Mischbereich
- 91: Formteilbereich
- 92: Mischbereich
- S1: Bereitstellen
- S2: Platzieren
- S3: Beschichten
- S4: Entformen

## Patentansprüche

1. Verfahren zur Herstellung eines Verbundteils (17), bei dem ein Substrat (12) mit einem Komponentensystem (15), vorzugsweise einem Mehrkomponentensystem, beschichtet wird, wobei das Verfahren folgende Schritte aufweist:
Bereitstellen (S1) eines Substrats (12) mit einem im herzustellenden Verbundteil (17) verbleibenden Formteilabschnitt (14) und einem vom herzustellenden Verbundteil (17) abzutrennenden integrierten Mischabschnitt (13) zur substratnahen Vermischung des Komponentensystems (15);
Einbringen (S2) des Substrats (12) in eine Kavität (8) eines Beschichtungswerkzeugs (6);
Beschichten (S3) des Substrats (12) durch Fluten der Kavität (8) mit dem Komponentensystem (15), wobei das Komponentensystem (15) durch den Mischabschnitt (13) des Substrats (12) in der Kavität (8) vermischt wird, bevor dieses den Formteilabschnitt (14) erreicht.

2. Verfahren nach Anspruch 1, wobei das Substrat (12) mit einem Mischabschnitt (13) bereitgestellt wird, der mehrere strömungsbeeinflussende Elemente (16) aufweist, insbesondere Vorsprünge und/oder Vertiefungen.

3. Verfahren nach Anspruch 2, wobei das Substrat (12) ferner mit einem Auslaufbereich (19) zur Beruhigung des Komponentensystems (15) bereitgestellt wird, welcher in Strömungsrichtung nach dem Mischabschnitt (13) vorgesehen ist.

4. Verfahren nach einem der Ansprüche 1 bis 3, wobei der Formteilabschnitt (14) des bereitgestellten Substrats (12) zum Tragen eines zu beschichtenden Halbzeugs eingerichtet ist oder ein solches bereits trägt.

5. Verfahren nach Anspruch 4, wobei das zu beschichtende Halbzeug ein Echtholzfurnier, ein faserverstärktes Halbzeug oder ein textiles Halbzeug aufweist.

6. Verfahren nach einem der Ansprüche 1 bis 5, wobei das Bereitstellen des Substrats (12) ein Herstellen des Substrats (12) durch Spritzgießen, insbesondere durch Spritzgießen eines thermoplastischen Materials umfasst.

7. Verfahren nach Anspruch 6, wobei das Beschichten des Substrats (12) und die Herstellung des Substrats (12) in derselben Maschine (1) erfolgt.

8. Verfahren nach Anspruch 7, wobei das Beschichten eines hergestellten Substrats (12) zeitgleich mit dem Herstellen eines weiteren Substrats (12a) erfolgt.

9. Verfahren nach Anspruch 8, wobei zur Herstellung des Substrats (12, 12a) ein Formwerkzeug (6) mit zwei Formhälften (61, 62) zur Bildung einer Kavität (9) verwendet wird, welche einen Formteilbereich (91) zur Ausbildung des Formteilabschnitts (14) und einen Mischbereich (92) zur Ausbildung des Mischabschnitts (13) aufweist.

10. Verfahren nach Anspruch 9, wobei das Substrat (12) durch Umlegen der Kavität von dem Formwerkzeug (6) in das Beschichtungswerkzeug (5) überführt wird.

11. Verfahren nach einem der Ansprüche 1 bis 10, ferner mit dem Schritt (S4) Entformen des beschichteten Substrats (12) aus dem Formwerkzeug (6) und Abtrennen des Mischabschnitts (13).

12. Verfahren nach einem der Ansprüche 1 bis 11, wobei als Komponentensystem (15) wenigstens zwei flüssige Komponenten im Wesentlichen unvermischt zugeführt werden, sodass eine Vermischung des Komponentensystems (15) in der Kavität (8) erfolgt.

13. Verfahren nach einem der Ansprüche 1 bis 11, wobei als Komponentensystem (15) wenigstens zwei flüssige Komponenten vorgemischt zugeführt werden, sodass in der Kavität (8) eine Nachvermischung des Komponentensystems (15) erfolgt.

## Claims

1. A method for producing a composite part (17), in which a substrate (12) is coated with a component system (15), preferably a multi-component system, wherein the method has the following steps:
providing (S1) a substrate (12) with a moulded part portion (14) remaining in the composite part (17) which is to be produced and with an integrated mixing portion (13), to be separated from the composite part (17) which is to be produced, for the mixing of the component system (15) close to the substrate;
introducing (S2) the substrate (12) into a cavity (8) of a coating tool (6);
coating (S3) the substrate (12) by flooding the cavity (8) with the component system (15), wherein the component system (15) is mixed by the mixing portion (13) of the substrate (12) in the cavity (8) before it reaches the moulded part portion (14) .

2. The method according to Claim 1, wherein the substrate (12) is provided with a mixing portion (13) which has several flow-influencing elements (16), in particular projections and/or depressions.

3. The method according to Claim 2, wherein the substrate (12) is provided furthermore with a run-out region (19) for calming the component system (15), which run-out region is provided after the mixing portion (13) in the flow direction.

4. The method according to one of Claims 1 to 3, wherein the moulded part portion (14) of the provided substrate (12) is arranged for carrying a semi-finished product which is to be coated, or already carries one such.

5. The method according to Claim 4, wherein the semi-finished product which is to be coated has a real wood veneer, a fibre-reinforced semi-finished product or a textile semi-finished product.

6. The method according to one of Claims 1 to 5, wherein the providing of the substrate (12) comprises a producing of the substrate (12) by injection moulding, in particular by injection moulding of a thermoplastic material.

7. The method according to Claim 6, wherein the coating of the substrate (12) and the producing of the substrate (12) takes place in the same machine (1) .

8. The method according to Claim 7, wherein the coating of a produced substrate (12) takes place simultaneously with the producing of a further substrate (12a).

9. The method according to Claim 8, wherein for the production of the substrate (12, 12a) a moulding tool (6) with two mould halves (61, 62) is used for the formation of a cavity (9), which has a moulded part region (91) for the formation of the moulded part portion (14), and a mixing region (92) for the formation of the mixing portion (13).

10. The method according to Claim 9, wherein the substrate (12) is transferred by shifting the cavity from the moulding tool (6) into the coating tool (5).

11. The method according to one of Claims 1 to 10, furthermore with the step (S4), demoulding of the coated substrate (12) from the moulding tool (6) and separating of the mixing portion (13).

12. The method according to one of Claims 1 to 11, wherein as component system (15) at least two liquid components are fed, in a substantially unmixed manner, so that a mixing of the component system (15) takes place in the cavity (8).

13. The method according to one of Claims 1 to 11, wherein as component system (15) at least two liquid components are fed in a pre-mixed manner, so that a post-mixing of the component system (15) takes place in the cavity (8).

## Revendications

1. Procédé de fabrication d'une pièce composite (17), dans lequel un substrat (12) est revêtu avec un système de composantes (15), de préférence d'un système multi-composantes, dans lequel le procédé comprend les étapes suivantes :
fourniture (S1) d'un substrat (12) avec un tronçon de pièce moulée (14) restant dans la pièce composite (17) à fabriquer et un tronçon de mélange (13) intégré à séparer de la pièce composite (17) à fabriquer pour le mélange du système de composantes (15) à proximité du substrat ;
introduction (S2) du substrat (12) dans une cavité (8) d'un outil de revêtement (6) ;
revêtement (S3) du substrat (12) par noyage de la cavité (8) avec le système de composantes (15), dans lequel le système de composantes (15) est mélangé dans la cavité (8) par le tronçon de mélange (13) du substrat (12) avant que celui-ci n'atteigne le tronçon de pièce moulée (14).

2. Procédé selon la revendication 1, dans lequel le substrat (12) est doté d'un tronçon de mélange (13) qui présente plusieurs éléments (16) influant l'écoulement, en particulier des saillies et/ou des creux.

3. Procédé selon la revendication 2, dans lequel le substrat (12) est doté en outre d'une zone de purge (19) pour faire reposer le système de composantes (15), lequel est prévu après le tronçon de mélange (13) dans le sens d'écoulement.

4. Procédé selon l'une des revendications 1 à 3, dans lequel le tronçon de pièce moulée (14) du substrat (12) fourni, est équipé pour supporter un produit semi-fini à revêtir ou supporte déjà un produit similaire.

5. Procédé selon la revendication 4, dans lequel le produit semi-fini à revêtir présente un plaquage en bois véritable, un produit semi-fini renforcé par fibres ou un produit textile.

6. Procédé selon l'une des revendications 1 à 5, dans lequel la fourniture du substrat (12) comprend une fabrication du substrat (12) par moulage par injection, en particulier par moulage par injection d'un matériau thermoplastique.

7. Procédé selon la revendication 6, dans lequel le revêtement du substrat (12) et la fabrication du substrat (12) s'effectuent dans la même machine (1) .

8. Procédé selon la revendication 7, dans lequel le revêtement d'un substrat (12) fabriqué s'effectue en même temps que la fabrication d'un autre substrat (12a).

9. Procédé selon la revendication 8, dans lequel pour fabriquer le substrat (12, 12a), un outil de moulage (6) avec deux moitiés de moule (61, 62) est utilisé pour former une cavité (9), laquelle présente une partie à pièce moulée (91) pour former le tronçon de pièce moulée (14) et une partie à mélange (92) pour former le tronçon de mélange (13).

10. Procédé selon la revendication 9, dans lequel le substrat (12) passe de l'outil de moulage (6) à l'outil de revêtement (5) par bascule de la cavité.

11. Procédé selon l'une des revendications 1 à 10, en outre avec l'étape (S4) de démoulage du substrat (12) revêtu hors de l'outil de moulage (6) et de séparation du tronçon de mélange (13).

12. Procédé selon l'une des revendications 1 à 11, dans lequel en tant que système de composantes (15), au moins deux composantes liquides sont amenées essentiellement non mélangées, de sorte qu'un mélange du système de composantes (15) s'effectue dans la cavité (8).

13. Procédé selon l'une des revendications 1 à 11, dans lequel en tant que système de composantes (15), au moins deux composantes liquides sont amenées pré-mélangées, de sorte qu'un mélange ultérieur du système de composantes (15) s'effectue dans la cavité (8).
